# EUROPEAN PATENT APPLICATION

(11) **EP 4 358 230 A1**
(43) Date of publication of application: **24.04.2024**
(21) Application number: 22844910.4
(22) Date of filing: 22.04.2022
(51) Int. Cl.: H01M 10/44, H02J 7/00

(54) **BATTERY CHARGING METHOD AND CIRCUIT, MULTI-CELL BATTERY, TERMINAL DEVICE, AND ELECTRONIC DEVICE**

(30) Priority: 20.07.2021 CN 202110834181
(71) Applicant: GUANGDONG OPPO MOBILE TELECOMMUNICATIONS CORP., LTD., Dongguan, Guangdong 523860 (CN)
(72) Inventor: XIE, Hongbin, Dongguan, Guangdong 523860 (CN)
(74) Representative: Novagraaf Technologies
(86) International application number: PCT/CN2022/088501
(87) International publication number: WO 2023/000739

(57) **Abstract**

Provided are a multi-cell battery charging method, a multi-cell battery charging circuit, a multi-cell battery, a terminal device, and an electronic device, relating to the technical field of batteries. The multi-cell battery charging method comprises: acquiring negative electrode potentials of battery cells in a multi-cell battery; comparing the negative electrode potentials of the battery cells to determine the minimum negative electrode potential; when the minimum negative electrode potential is greater than or equal to a safe potential, controlling the multi-cell battery to be charged according to a first mode; and when the minimum negative electrode potential is less than the safe potential, controlling the multi-cell battery to operate according to a second mode. The method allows for reduction of the occurrence of lithium plating while ensuring a high charging rate.

## Description

### CROSS REFERENCE TO RELATED APPLICATIONS

The present disclosure claims priority to Chinese Patent Application NO. 202110834181.8 and entitled "BATTERY CHARGING METHOD AND CIRCUIT, MULTI-CELL BATTERY, TERMINAL DEVICE, AND AN ELECTRONIC DEVICE", filed on July 20, 2021, the entire contents of which are herein incorporated by reference in their entireties.

### TECHNICAL FIELD

The present disclosure relates to the technology field of charging, in particular to a charging method and circuit for a multi-cell battery, a multi-cell battery, a terminal device, and an electronic device.

### BACKGROUND

As functions of mobile terminal devices continue to be enhanced, requirements on battery capacity are also increasing. Using multi-cell batteries has become one of the main solutions to increase overall battery capacity and battery life.

In a current fast-charging process of the multi-cell batteries, a fixed charging speed is generally used for charging. As long as charging environment matches with the fast-charging condition, fast-charging will be performed at the fastest speed.

However, if a multi-cell battery is charged at the fastest speed throughout its entire life cycle, it may cause lithium deposition in the battery and accelerate aging of the battery.

### SUMMARY

According to a first aspect of the present disclosure, a charging method for a multi-cell battery is provided, which includes: obtaining negative electrode potentials of cells of the multi-cell battery; comparing the negative electrode potentials of the cells to determine a minimum negative electrode potential; controlling the multi-cell battery to be charged in a first mode in response to the minimum negative electrode potential being greater than or equal to a safe potential; and controlling the multi-cell battery to operate in a second mode in response to the minimum negative electrode potential being less than the safe potential.

According to a second aspect of the present disclosure, a charging circuit for a multi-cell battery is provided, which includes: a detection circuit, configured to obtain negative electrode potentials of cells of the multi-cell battery; a control circuit, configured to compare the negative electrode potentials of the cells of the multi-cell battery to determine the minimum negative electrode potential; control the multi-cell battery to be charged in a first mode in response to the minimum negative electrode potential being greater than or equal to a safe potential; and control the multi-cell battery to operate in a second mode in response to the minimum negative electrode potential being less than the safe potential.

According to a third aspect of the present disclosure, a multi-cell battery is provided, which includes: a plurality of cells, which are connected in parallel or in series; an insulating measurement structure, arranged between two adjacent cells and configured to isolate adjacent cells and measure the negative electrode potential of the cells; a housing, which is configured to cover the plurality of cells and the insulating measurement structure.

According to a fourth aspect of the present disclosure, a terminal device is provided, which includes the aforesaid multi-cell battery.

According to a fifth aspect of the present disclosure, an electronic device is provided, which includes: a processor; a memory for storing executable instructions of the processor; the processor is configured to implement a charging method for a multi-cell battery in the first aspect and its possible embodiments via executing the executable instructions.

### BRIEF DESCRIPTION OF THE DRAWINGS

FIG. 1 shows a schematic structural diagram of a multi-cell battery according to an exemplary embodiment;
FIG. 2 shows a flow chart of a charging method for a multi-cell battery according to an exemplary embodiment;
FIG. 3 shows a diagram of a negative electrode potential versus time during charging and discharging of a multi-cell battery according to an exemplary embodiment;
FIG. 4 shows a schematic diagram of a charging circuit for a multi-cell battery according to an exemplary embodiment;
FIG. 5 shows a front view of another multi-cell battery according to an exemplary embodiment;
FIG. 6 shows a schematic cross-section view of the multi-cell battery shown in FIG. 5;
FIG. 7 shows a schematic longitudinal-section view of the multi-cell battery shown in FIG. 5;
FIG. 8 shows a schematic structural diagram of an insulating measurement structure according to an exemplary embodiment;
FIG. 9 shows a schematic structural diagram of an electronic device according to an exemplary embodiment.

### DETAILED DESCRIPTIONs

Exemplary embodiments will now be described more fully with reference to the accompanying drawings. However, exemplary embodiments may be embodied in various forms and should not be construed as limiting to the examples set forth herein; rather, these embodiments are provided so that this disclosure will be thorough and complete, and will fully convey the concepts of the exemplary embodiments to those skilled in the art. The described features, structures or characteristics may be combined in any suitable manner in one or more embodiments. In the following description, numerous specific details are provided to provide a thorough understanding of embodiments of the disclosure. However, those skilled in the art will appreciate that the technical solutions of the present disclosure may be performed without one or more of the specific details described, or other methods, components, devices, steps, etc. may be adopted to perform the technical solutions of the present disclosure. In other instances, well-known technical solutions have not been shown or described in detail to avoid obscuring aspects of the disclosure.

Furthermore, the drawings are merely schematic illustrations of the present disclosure and are not necessarily drawn to scale. The same reference numerals in the drawings represent the same or similar parts, and thus their repeated description will be omitted. Some of the block diagrams shown in the figures are functional entities, which is not necessarily correspond to physically or logically separate entities. These functional entities may be implemented in software form, or implemented in one or more hardware modules or integrated circuits, or implemented in different networks and/or processor devices and/or microcontroller devices.

The flowcharts shown in the figures are illustrative only and do not necessarily include all steps. For example, some steps can be decomposed, and some steps can be merged or partially merged, so actual order of execution may change according to the actual situation. In addition, all the following terms "first", "second" and "third" are only for the purpose of distinction and should not be used to limit the present disclosure.

During a charging process of a lithium-ion battery, lithium-ions Li+ will be de-intercalated from a positive electrode and intercalated into a negative electrode; however, when some abnormal situations occur: such as insufficient space for intercalating lithium-ions in the negative electrode, too much resistance for Li+ to be intercalated into the negative electrode, or Li+ being de-intercalated from the positive electrode too fast but unable to intercalate the same amount of Li+ into the negative electrode, the Li+ that cannot be intercalated into the negative electrode may only be deposited on the surface of the negative electrode and be formed silvery white metallic lithium elementary substance, which is called lithium deposition.

The lithium deposition is a loss condition of the lithium-ion battery. The lithium deposition not only reduces battery performance and greatly shortens the cycle life, but also limits the battery's fast-charging capacity and may cause catastrophic consequences such as combustion and explosion. If the negative electrode can be controlled not to deposit the lithium, the charging process may minimize the aging of the battery.

The applicants found in research that generally slight lithium deposition has a reversible process. That is to say, the newly generated lithium metal elementary substance may be reconverted into Li+ and intercalated into the negative electrode. Taking advantage of this, it can not only suppress lithium deposition on the negative electrode, but also ensure high charging speed and improve charging efficiency.

Based on this, the exemplary embodiments of the present disclosure provide a charging method for a multi-cell battery, which may be applied to the lithium battery. The lithium battery includes a lithium-ion battery and a lithium metal battery, which is not particularly limited in the exemplary embodiments of the present disclosure.

Before introducing the above-mentioned charging method for a multi-cell battery, a brief explanation of the multi-cell battery suitable for the above charging method is needed.

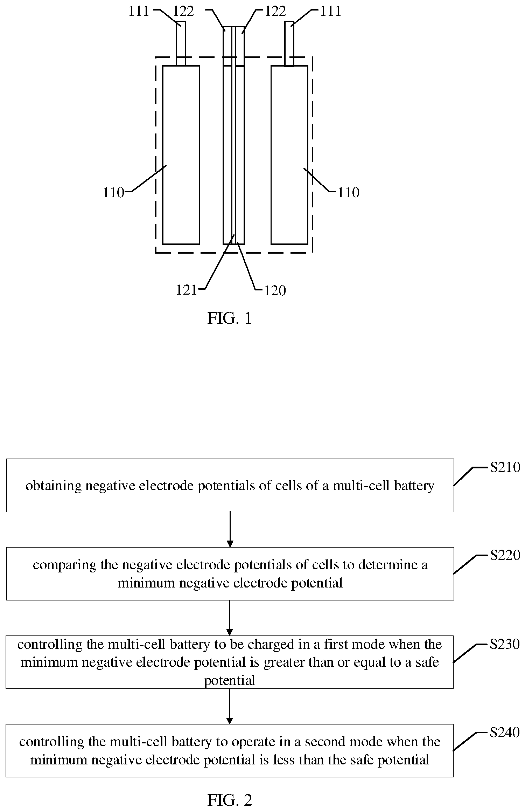

In the exemplary embodiments of the present disclosure, referring to FIG. 1, a multi-cell battery is provided. The multi-cell battery mainly includes a plurality of cells 110 and an insulating measurement structure 120.

The cells 110 are connected in parallel or in series. In the embodiments of the present disclosure, the "plurality" refers to two or more than two. Among the plurality of cells 110, each two cells 110 may be connected with each other in parallel or in series. When the number of the cells 110 is more than two, a hybrid connection may also be realized. That is to say, the exemplary embodiments of the present disclosure do not specifically limit the connection of the cells 110 in the multi-cell battery.

It should be noted that the cells 110 further include a positive electrode tab and a negative electrode tab 111, the positive electrode and the negative electrode of the cells 110 are made from a compound with lithium-ions which are capable of reversibly intercalating and de-intercalating. The positive electrode generally selects a lithium-intercalated transition metal oxide which has a potential greater than 3V relative to the lithium and which is stable in the air, such as LiCoC₂, LiNiO₂, LiMn₂O₄, LiFePC₄, etc. The negative electrode generally selects compounds which have a potential as close as possible to that of the lithium and which is capable of intercalating the lithium, such as various carbon materials, including natural graphite, synthetic graphite, carbon fiber, mesophase carbon micro beads, etc., as well as metal oxides, including SnO, SnO₂, AmorphousTin-based Composite Oxide, etc.

An insulating measurement structure 120 is arranged between each two adjacent cells 110. The insulating measurement structure 120 is configured to isolate the adjacent cells 110 and measure negative electrode potentials of the cells 110. That is to say, the insulating measurement structure 120 has the capability to isolate the adjacent cells 110 to prevent short circuit resulted from electrical contact between the adjacent cells 110 and to measure the negative electrode potentials of the cells 110. The specific structural form of the insulating measurement structure 120 will be described in detail in subsequent embodiments.

It should be noted here that an insulating measurement structure 120 includes an insulation layer 121 and a measurement layer, the insulation layer 121 may be arranged between two adjacent cells 110 in the multi-cell battery, and the measurement layer may be arranged on a side of the insulation layer 121 close to a cell 110, a reference tab 122 is further arranged on the measurement layer. A negative electrode potential of a cell 110 may be obtained by measuring a potential difference between a reference tab 122 and a negative electrode tab 111.

In the exemplary embodiments of the present disclosure, in order to avoid electrical conduction resulted from contact between the measurement layer and a cell to affect the accuracy of the measured negative electrode potential, it is also necessary to provide an isolation layer between the measurement layer and the cell, the isolation layer may be configured to isolate the measurement layer and the cell.

In practical applications, the above-mentioned multi-cell battery may be applied to an electrical equipment. For example, the electrical equipment may be a mobile phone, a computer, a drone, an automobile, etc., which are not specifically limited in the embodiments of the present disclosure.

A charging method for a multi-cell battery of the exemplary embodiments of the present disclosure will be described in detail below with reference to FIG. 2. The charging method for a multi-cell battery may include the following operations illustrated in FIG. 2.

At block S210, the method may include obtaining negative electrode potentials of cells of the multi-cell battery.

In the exemplary embodiments of the present disclosure, the multi-cell battery is a battery including a plurality of cells. The "plurality" herein is greater than or equal to two. In the multi-cell battery, the plurality of cells may be connected in parallel, in series, or in a hybrid connection.

The negative electrode potential is an important indicator for measuring lithium deposition on the negative electrode. When the negative electrode potential is lower than 0V, lithium deposition on the negative electrode may occur. In practical applications, it has many ways to obtain the negative electrode potential. In the exemplary embodiments of the present disclosure, the above-mentioned insulating measurement structure may be configured to obtain the negative electrode potential.

After the insulating measurement structure for measuring the negative electrode potential is obtained through the above way, the negative electrode potential of each cell may be directly obtained through the insulating measurement structure arranged in the multi-cell battery, which improves the convenience and accuracy of obtaining the negative electrode potential.

In the exemplary embodiments of the present disclosure, in order to grasp the deposition condition of the lithium-ions on the negative electrode in a timely manner, the negative electrode potential of each cell may be obtained in real time, so as to obtain the deposition condition of the lithium-ions on the negative electrode of each cell in real time through the negative electrode potential, and effectively manage the subsequent charging process. Since the negative electrode potential is not very low at the beginning of charging, the negative electrode potential is also obtained according to a preset period after the multi-cell battery is charged in a first preset charging current for a preset time. The specific preset time and preset period may be determined according to an actual situation, in which it is ensured that the required negative electrode potential can be obtained in time, and the exemplary embodiments of the present disclosure do not impose special limitations on this.

At block S220, the method may include comparing negative electrode potentials of cells to determine a minimum negative electrode potential.

In the exemplary embodiments of the present disclosure, after obtaining the negative electrode potentials of cells of the multi-cell battery, the negative electrode potentials of cells need to be compared to determine the minimum negative electrode potential among the multiple negative electrode potentials.

In the practical applications, it has many ways to compare and determine the minimum negative electrode potential, for example, comparing pairwise to gradually determine a minimum value, etc. The exemplary embodiments of the present disclosure do not specifically limit the specific manner of determining the minimum negative electrode potential.

At block S230, the method may include controlling the multi-cell battery to be charged in a first mode when the minimum negative electrode potential is greater than or equal to a safe potential.

In this exemplary embodiment, the safe potential is a critical potential for which the cells of the multi-cell battery may be charged in the first mode. Irreversible lithium deposition may occur in the cells when being charged below the safe potential. Among the negative electrode potential of multiple electrodes, if the minimum negative electrode potential is greater than or equal to the safe potential, then all cells can be charged in the first mode without occurring lithium deposition, even if a lithium deposition process occurs, the lithium deposition process is reversible.

In order to reduce the charging speed as little as possible, i.e., the charging current, and ensure the lithium deposition be within a reversible range, in the exemplary embodiments of the present disclosure, the safe potential may set to any value or any range of -100mV-0.05V. For example, when the safe potential is -10mV, the multi-cell battery can be controlled to be charged in the first mode, for example, to be charged in a fast-charging mode, as long as the minimum negative electrode potential among cells of the multi-cell battery is greater than or equal to -10m V

In an alternative embodiment of the present disclosure, the first mode may be the fast-charging mode, and in the first mode, the multi-cell battery may be charged in a first preset current. The first preset current may be configured to be a large current that the cells can bear for fast-charging. Under this current, side reactions may not occur in the cells, and the current may not adversely affect the life and performance of the cells, and the fast-charging may be achieved maximally.

In practical applications, a magnitude of the first preset current may be determined according to actual conditions. For example, a current range for the first preset current may be configured to be 2C-10C, and C is a total capacity of the plurality of cells. Assuming that the total capacity of the plurality of cells is 1000mAh, then the current range for the first preset current may be 2000mA-10A.

Since in the fast-charging mode, lithium deposition on the negative electrode may occur in the cells, the exemplary embodiments of the present disclosure provide a safe potential. Only when the minimum negative electrode potential is greater than or equal to the safe potential, the multi-cell battery can be charged in the fast-charging mode. Thus fast-charging in the largest current may be achieved as much as possible while ensuring reversible lithium deposition. The probability of reducing charging speed due to inhibiting lithium deposition may be reduced and user experience may be improved.

In the exemplary embodiments of the present disclosure, by obtaining the minimum negative electrode potential of the cells and controlling the multi-cell battery to be charged in the first mode when the minimum negative electrode potential is greater than or equal to the safe potential, it may ensure that each cell operates in a safe potential range in the fast-charging process, and when a cell corresponding to the minimum negative electrode potential is capable of being fast charged, lithium deposition may naturally not occur in other cells, even if it does occur, it will be in a reversible range. Thus, irreversible lithium deposition on each cell can be avoided, reducing the aging rate of the multi-cell battery while ensuring a high charging rate.

At block S240, the method may include controlling the multi-cell battery to operate in a second mode when the minimum negative electrode potential is less than the safe potential.

In the exemplary embodiments of the present disclosure, if the minimum negative electrode potential is less than the safe potential, charging is continued in the first mode, for example, in the fast-charging mode, it is likely to cause irreversible lithium deposition in the cells, thus accelerating the battery aging and affecting the life of the entire battery. Therefore, when the minimum negative electrode potential is less than the safe potential, the multi-cell battery is controlled to operate in another mode, i.e., in the second mode, which may avoid irreversible lithium deposition and may further convert the lithium metal elementary substance in the reversible lithium deposition generated when charging in the first mode into Li+ and intercalate it into the negative electrode, thereby avoiding the generation of inactive lithium metal elementary substance.

In the exemplary embodiments of the present disclosure, it has a plurality of implementations for controlling the multi-cell battery to operate in the second mode.

Implementation I: to control the multi-cell battery to be in a discharging state until the minimum negative electrode potential is greater than or equal to the safe potential.

Since charging in a large current may cause the lithium metal elementary substance depositing on the surface of the negative electrode and lower the negative electrode potential, the problem of lithium deposition occurs. Therefore, in the exemplary embodiments of the present disclosure, when the minimum negative electrode potential is less than the safe potential, a discharging process, i.e., a reverse charging process, may be used for making at least part of the deposited lithium metal elementary substance back to the positive electrode, which makes the lithium deposition reversible, thereby causing the negative electrode potential to increase. When the negative electrode potential is greater than a potential for lithium deposition, the lithium deposition phenomenon may be avoided.

In the exemplary embodiments of the present disclosure, with the safe potential as a reference, the multi-cell battery is in the discharging state for a period of time. When the minimum negative electrode potential of the multiple cells is greater than or equal to the safe potential, the discharge process may be stopped, and then the multi-cell battery is charged in the first mode. The above process may be repeated until the multi-cell battery is fully charged.

It should be noted that during the charging process, determining the negative electrode potential of a certain cell as the minimum negative electrode potential does not necessarily mean that the minimum negative electrode potential after the discharging process is still that of the certain cell. In other words, the minimum negative electrode potential needs to be updated in real time, and not fixed to one of a certain cell.

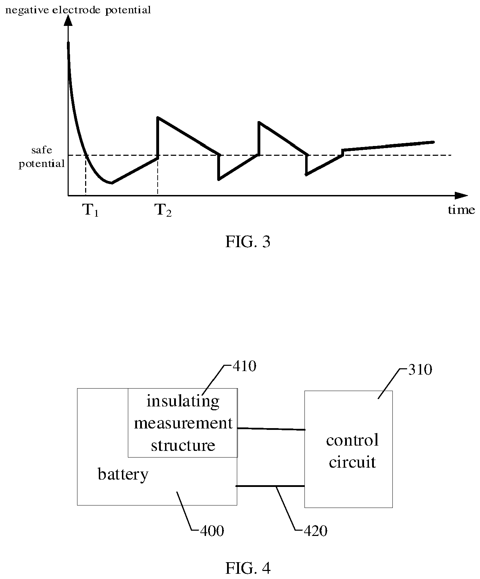

FIG. 3 shows a diagram of a negative electrode potential versus time during charging and discharging of a multi-cell battery according to an exemplary embodiment. In FIG. 3, at first, the multi-cell battery is charged in a large first preset current. As the charging proceeds, the negative electrode potential drops. When the negative electrode potential drops to the safe potential, that is, at time T1, the multi-cell battery is discharged in a small current (for example, 0.01C-1C). As the discharge proceeds, the negative electrode potential increases. The minimum negative electrode potential increases at time T2, and the battery can be charged in the first preset current. The above process is repeated until the multi-cell battery is fully charged.

In the implementation I for the second mode provided by the exemplary embodiments of the present disclosure, by using the large first preset current to charge the multi-cell battery, the multi-cell battery is controlled to be discharged to increase the negative electrode potential when the minimum negative electrode potential is less than the safe potential, and the multi-cell battery is charged again after the minimum negative electrode potential is greater than the safe potential. Thus, a charge-discharge cycle process is realized, which may achieve maximum fast-charging while ensuring the lithium deposition reversible.

In the exemplary embodiments of the present disclosure, determining whether the multi-cell battery is fully charged may include: obtaining a voltage between a positive terminal and a negative terminal of the multi-cell battery, and determining whether the multi-cell battery is fully charged according to the voltage between the positive terminal and the negative terminal of the multi-cell battery; when the voltage between the positive terminal and the negative terminal reaches a full voltage set for the multi-cell battery, it indicates that the multi-cell battery is fully charged. The multi-cell battery is stopped to be charged when the multi-cell battery is fully charged.

Implementation II: To control the multi-cell battery to be in a resting state until the minimum negative electrode potential is greater than or equal to the safe potential.

Compared with that in the Implementation I, the discharging state is replaced with the resting state in Implementation II, in which the multi-cell battery is neither charged nor discharged, waiting for the lithium-ions to completely enter the negative electrode. The resting process may also make the lithium deposition reversible with at least part of the deposited lithium metal elementary substance being recovered back to the positive electrode. Until it is detected that the minimum negative electrode potential is greater than the safe potential, fast-charging is continued in the first preset current, and the above process is repeated until the multi-cell battery is fully charged.

Different from that in Implementation I, it may take longer for the minimum negative electrode potential to increase to be above the safe potential. That is, duration from time T1 to time T2 in the resting state may be longer, which may also lengthen the entire charging time, but it may also achieve the maximum fast-charging while ensuring the lithium deposition reversible.

Implementation III: To control the multi-cell battery to be charged in a second preset current less than the first preset current.

In the exemplary embodiments of the present disclosure, when the minimum negative electrode potential is less than the safe potential, which is caused during the fast-charging in the first preset current, a small second preset current may be configured for slow charging. No lithium deposition will occur in the slow charging process, and enough time is provided for lithium-ions to enter the negative electrode in the multi-cell battery, thereby ensuring the lithium metal elementary substance deposited during the fast-charging returning to the positive electrode, and achieving the purpose of making lithium deposition reversible. Until it is detected that the minimum negative electrode potential is greater than the safe potential, fast-charging is continued in the first preset current, and the above process is repeated until the multi-cell battery is fully charged.

Compared with that in the Implementations I and II, the safe potential in the Implementation III needs to be set to be high, for example, any value of -10mV-0.05V, to prevent the negative electrode potential from being difficult to be increased when the multi-cell battery is charged in the second preset current.

In the charging method for a multi-cell battery provided by the exemplary embodiments of the present disclosure, controlling the charging process of the multi-cell battery based on the minimum negative electrode potential in the cells, may avoid occurrence of the lithium deposition phenomenon while achieving fast-charging, thereby improving charging efficiency while ensuring safety of the multi-cell battery.

Based on the above charging method for a multi-cell battery, the exemplary embodiments of the present disclosure further provide a charging circuit for a multi-cell battery. FIG. 4 shows a schematic diagram of a charging circuit for a multi-cell battery according to an exemplary embodiment. As shown in FIG. 4, the charging circuit 300 for a multi-cell battery may include a detection circuit and a control circuit 310.

The detection circuit may be configured for obtaining negative electrode potentials of cells of the multi-cell battery 400.

In order to facilitate the detection circuit to obtain a negative electrode potential of each cell of the multi-cell battery, in the exemplary embodiments of the present disclosure, the detection circuit may include an insulating measurement structure 410 and a plurality of connection wires 420. An insulating measurement structure 410 may be arranged between each two adjacent cells of the multi-cell battery 400. An end of each connection wire 420 of the plurality of connection wires 420 may be electrically connected to one of the positive electrode tab, the negative electrode tab of a corresponding cell or the reference tab of the insulating measurement structure 410, and another end of the connection wire 420 may be electrically connected to the control circuit 310. The negative electrode potential of the cells may be obtained by capturing the potential difference between the negative electrode tab and the reference tab.

In the exemplary embodiments of the present disclosure, an insulating measurement structure 410 may include an insulation layer, a measurement layer, and an isolation layer. The insulation layer may be arranged between two adjacent cells of the multi-cell battery. At least one side of the insulation layer close to the cells may have a measurement layer arranged thereat. One measurement layer corresponds to one cell, and the measurement layer may be configured for measuring the negative electrode potential of the cell. The isolation layer may be arranged between a measurement layer and the cell, the isolation layer may be configured for isolating the measurement layer and the cell. The specific arrangement will be described in detail in the subsequent embodiments of the multi-cell battery, and will not be described here.

In a specific detection process, the detection circuit may be configured to obtain the negative electrode potentials of cells in real time, or obtain the negative electrode potentials according to a preset period when the multi-cell battery is charged in the first preset current for a preset time, etc. Detection frequency and detection starting time of the detection circuit may be set according to actual needs, which will not be described here.

In the exemplary embodiments of the present disclosure, a communication connection may be set between the detection circuit and the control circuit 310, and the detection circuit may send the detected negative electrode potentials of cells to the control circuit 310. The communication connection between the detection circuit and the control circuit 310 may be wired connection or wireless connection, which is not limited in the embodiments of the present disclosure.

After receiving the negative electrode potentials of cells detected by the detection circuit, the control circuit 310 may be configured to compare the negative electrode potentials of cells to determine the minimum negative electrode potential; when the minimum negative electrode potential is greater than or equal to the safe potential, the multi-cell battery is controlled to be charged in the first mode; when the minimum negative electrode potential is less than the safe potential, the multi-cell battery is controlled to operate in the second mode.

In an alternative implementation of the embodiments of the present disclosure, the control circuit 310 may be configured to control the multi-cell battery to be charged in the first preset current when the minimum negative electrode potential is greater than or equal to the safe potential.

In an alternative implementation of the embodiments of the present disclosure, the control circuit 310 may be configured to control the multi-cell battery to be charged in the second preset current when the minimum negative electrode potential is less than the safe potential, and the second preset current is less than the first preset current.

In an alternative implementation of the embodiments of the present disclosure, the control circuit 310 may be configured to control the multi-cell battery to be in a resting state when the minimum negative electrode potential is less than the safe potential, until the minimum negative electrode potential is greater than or equal to the safe potential.

In an alternative implementation of the embodiments of the present disclosure, the control circuit 310 may be configured to control the multi-cell battery to be in a discharging state when the minimum negative electrode potential is less than the safe potential, until the minimum negative electrode potential is greater than or equal to the safe potential.

In an alternative implementation of the embodiments of the present disclosure, the control circuit 310 may be further configured to obtain a voltage between the positive terminal and the negative terminal of the multi-cell battery, and determine whether the multi-cell battery is fully charged according to the voltage between the positive terminal and the negative terminal of the multi-cell battery; when the multi-cell battery is fully charged, the charging of the multi-cell battery is stopped.

It should be noted that although various steps of the method of the present disclosure are depicted in a specific order in the drawings, it does not require or imply that these steps must be performed in the specific order, or that all of the illustrated steps must be performed to achieve the desired results. Additionally or alternatively, certain steps may be omitted, multiple steps may be combined into one step for execution, and/or one step may be decomposed into multiple steps for execution, etc.

The multi-cell battery which is applicable to the charging method for a multi-cell battery and charging circuit in the embodiments of the present disclosure. The multi-cell battery mainly includes a plurality of cells, an insulating measurement structure, and a housing.

The plurality of cells may be connected in parallel or in series. The "plurality" in the embodiments of the present disclosure refers to two or more than two. Each two cells among the plurality of cells may be connected with each other in parallel or in series. When the number of the cells is more than two, the hybrid connection may also be realized. That is to say, the exemplary embodiments of the present disclosure do not specifically limit the connection of the cells of the multi-cell battery.

The insulating measurement structure is arranged between two adjacent cells. The insulating measurement structure may be configured to isolate the adjacent cells and measure the negative electrode potentials of the cells. That is to say, the insulating measurement structure may further isolate the cells while measuring the negative electrode potential of the cells, to prevent short circuit due to electrical contact between the cells.

The housing is configured to cover the plurality of cells and insulating measurement structure to form an overall battery structure.

The following takes a battery containing three cells as an example to illustrate the above-mentioned multi-cell battery.

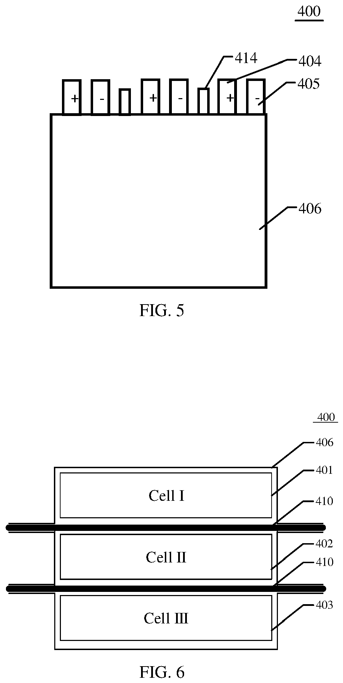

As shown in FIG. 5 to FIG. 7, the multi-cell battery 400 includes a cell I 401, a cell II 402, and a cell III 403. Each of the cell I 401, the cell II 402, and the cell III 403 include a positive electrode tab 404 and a negative electrode tab 405, and both the positive electrode tab 404 and the negative electrode tab 405 are penetrated the housing 406 to outside. The cell I 401 and the cell II 402 may be connected in series or in parallel, and the cell II 402 and the cell III 403 may be connected in series or in parallel, which are not limited here.

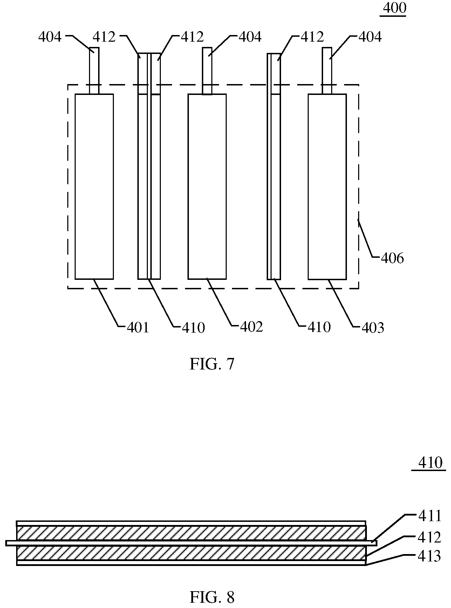

In the exemplary embodiments of the present disclosure, an insulating measurement structure 410 may be arranged between the cell I 401 and the cell II 402, and an insulating measurement structure 410 may also arranged between the cell II 402 and the cell III 403. FIG. 8 shows a schematic structural diagram of an insulating measurement structure. The insulating measurement structure 410 includes an insulation layer 411, a measurement layer 412, and an isolation layer 413.

The insulation layer 411 is arranged between two adjacent cells of the multi-cell battery. That is, it is arranged between the cell I 401 and the cell II 402, or between the cell II 402 and cell III 403 in this embodiment.

At least one side of an insulation layers 411 close to the cells has a measurement layer 412 arranged thereat. One measurement layer 412 corresponds to one cell, and the measurement layer 412 may be configured to measure a negative electrode potential of the cell. For a battery including only two cells, the number of the insulating measurement structure 410 is only one, in which measurement layers 412 are provided at both sides of the insulation layer 411. However, for the case where the number of the cells is greater than two, for example, as shown in FIG. 7, when the number of the cells is three, two insulating measurement structures 410 are required. Two measurement layers 412 is needed to be provided at both sides of the insulation layer 411 of one insulating measurement structure 410, and one measurement layer 412 is needed to be provided at only one side of the insulation layer 411 of the other insulating measurement structure 410. As long as one cell corresponds to one measurement layer 412 to ensure that the negative electrode potential of the cell may detected through the corresponding measurement layer 412. The measurement layer 412 may be at least one of lithium metal and lithium titanate, and is mainly configured to provide a reference voltage, which is equivalent to a ground connection for the cell. Furthermore, a thickness of the measurement layer 412 may be any value of 1-100µm, and may be specifically determined according to the actual situation of the cells.

That is to say, in order to avoid the number of the measurement layers 412 being greater than the number of the cells, at least one side of an insulation layer 411 close to the cells may have a measurement layer 412 arranged thereat, and one measurement layer 412 corresponds to one cell. With setting one measurement layer 412 for one cell, the negative electrode potential of each cell 412 in the multi-cell battery can be measured, and providing technical support for charging control of the multi-cell battery.

An isolation layer 413 may be arranged between a measurement layer 412 and a cell, and the isolation layer 413 may be configured to isolate the measurement layer 412 and the cell to prevent electrical connection between the measurement layer 412 and the cell, which may affect the measurement results. The isolation layer 412 may be a thin isolation film, as long as it is capable of achieving an isolation effect.

Different from the isolation layer 413, the insulation layer 411 not only plays the role of isolation, but also plays the role of supporting the measurement layer 412. In practical applications, the insulation layer 411 may be a composite material layer that is resistant to electrolyte corrosion and is non-conductive. For example, the insulation layer 411 may be a composite material layer which is made from at least one of polypropylene, polyethylene, polyimide film, polyamide film, polyethylene terephthalate, and spandex or aramid film. Moreover, a thickness of the insulation layer 411 may be any value of 0.1~1000um, and the specific thickness of the insulation layer 411 may be determined according to the actual situation of the cells.

In the exemplary embodiments of the present disclosure, in order to facilitate the measurement of the negative electrode potential, a reference tab 414 is further needed to be provided on the measurement layer 412 to measure the negative electrode potential by measuring the potential difference between the negative electrode tab 405 and the reference tab 414. The material of the reference tab 414 and the material of the negative electrode tab 405 may be the same. For example, the reference tab 414 and the negative tab 405 may be made from at least one of aluminum, copper, nickel, cobalt, tungsten, tin, lead, iron, silver, gold, and platinum or alloys thereof, which not particularly limited in the exemplary embodiments of the present disclosure.

In an alternative embodiment of the present disclosure, as shown in FIG. 4, the reference tab 414 and the negative electrode tab 405 may be arranged at the same side of the multi-cell battery 400 to facilitate measurement of the negative electrode potential.

In the exemplary embodiments of the present disclosure, for different connections among the cells, the insulation layers 411 may have different sizes. Specifically, when two adjacent cells are connected in parallel, a surface area of a side of the insulation layer 411 close to a cell may be consistent with a surface area of a side of the cell.

However, when two adjacent cells are connected in series, as shown in FIG. 5, a surface of a side of each insulation layer 411 is greater than a surface area of a side of the cell, and the insulation layers 411 and the housing 406 are sealed to form multiple single-cell reception spaces. Each single-cell reception space may be configured to accommodate a single cell to achieve the purpose of completely isolating cells and preventing conduction between the cells.

In an actual setting, the insulation layers 411 and the housing 406 may be sealed through a heat sealing process, and the surroundings of each insulation layer 411 need to be edge-sealed with the housing 406.

The exemplary embodiments of the present disclosure have no special requirements for the size of the measurement layer 412, and a surface area of a side of the measurement layer 412 may be set to be the same size as that of the cells, or may be less than that of the cells, which may be determined according to the actual situation and not particularly limited in the exemplary embodiments of the present disclosure.

In addition, the surface area of a side of the isolation layer 413 needs to be the same size as that of the measurement layer 412 to isolate the measurement layer 412 and the cells.

In the exemplary embodiments of the present disclosure, in order to achieve the charging control of the above multi-cell battery, the multi-cell battery 400 may further include a control component, which may be connected to the positive electrode tab 404, the negative electrode tab 405, and the reference tab 414 and may capture the negative electrode potentials of cells of the multi-cell battery 400 and control a charging state of the multi-cell battery 400.

In practical applications, the control component may be arranged inside the housing 406 of the multi-cell battery 400, or may be arranged in other devices outside the housing 406, for example, in a charger for charging the multi-cell battery, which is not particularly limited in the exemplary embodiments of the present disclosure.

The exemplary embodiments of the present disclosure further provide a terminal device, which includes the above-mentioned multi-cell battery, the specific structure of the multi-cell battery has been described in detail in the above-mentioned embodiments, and will not be described again.

The exemplary embodiments of the present disclosure further provide a computer-readable storage medium, on which a program product capable of implementing the method described above in this disclosure is stored. In some possible embodiments, various aspects of the present disclosure may also be implemented in the form of a program product, which includes program code, when the program product works on a terminal device, the program code is configured to cause the terminal device to execute the steps according to the various exemplary embodiments of the present disclosure described in the above-mentioned "Exemplary Method" section of the present disclosure, for example, to execute any one or more steps in FIG. 1.

The program product may take the form of a portable compact disk read-only memory (CD-ROM) and include the program code, and may be run on a terminal device such as a personal computer. However, the program product of the present disclosure is not limited thereto, in the present disclosure, the readable storage medium may be any tangible medium including or storing a program which may be used by or in conjunction with an instruction execution system, an apparatus, or a device.

The Program Product may take the form of one or more readable medium in any combination. The readable medium may be a readable signal medium or a readable storage medium. The readable storage medium may be, for example, but not limited to, an electrical, magnetic, optical, electromagnetic, infrared, or semiconductor system, equipment or device, or any combination thereof. More specific examples (non-exhaustive list) of the readable storage medium include: electrical connection with one or more conductors, a portable disk, a hard disk, a random access memory (RAM), a read only memory (ROM), an erasable programmable read-only memory (EPROM or flash memory), an optical fiber, a portable compact disk read-only memory (CD-ROM), an optical storage device, a magnetic storage device, or any suitable combination of the above.

A computer-readable signal medium may include a data signal propagated in a baseband or as part of a carrier wave carrying readable program code therein. Such propagated data signal may take many forms, including but not limited to electromagnetic signals, optical signals, or any suitable combination of the above. A readable signal medium may also be any readable medium other than the readable storage medium which is capable of sending, propagating, or transporting the program for using by or in connection with an instruction execution system, apparatus, or device.

The program code embodied on the readable medium may be transmitted with any suitable medium, including but not limited to wireless, wireline, optical cable, RF, etc., or any suitable combination of the foregoing.

The program code for performing the operations of the present disclosure may be written in any combination of one or more programming languages, including object-oriented programming languages such as Java, C++, etc., as well as conventional procedural programming languages-such as "C" language or similar programming languages. The program code may execute entirely on the user's computing device, partly on the user's device, as a stand-alone software package, partly on the user's computing device and partly on a remote computing device, or entirely on the remote computing device or a server. In situations involving the remote computing device, the remote computing device may be connected to the user computing device through any kind of network, including a local area network (LAN) or a wide area network (WAN), or may be connected to an external computing device (such as connect through the Internet using an Internet service provider).

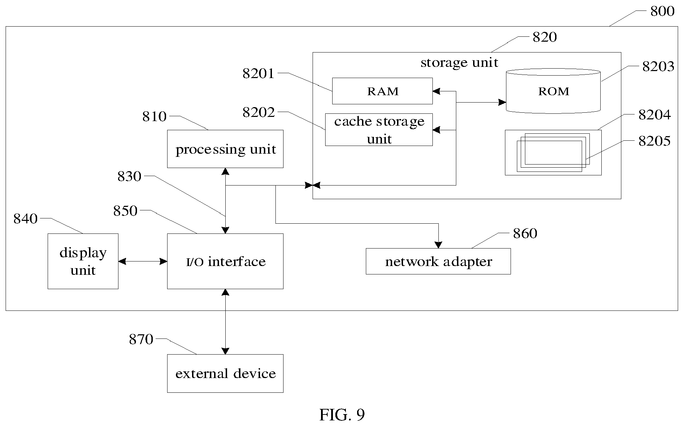

The exemplary embodiments of the present disclosure further provide an electronic device, which will be described below with reference to FIG. 9. It should be understood that the electronic device 800 shown in FIG. 9 is only an example and should not bring any limitations to the functions and scope of use of the embodiments of the present disclosure.

As shown in FIG. 9, the electronic device 800 is embodied in the form of a general computing device. The components of the electronic device 800 may include, but are not limited to, at least one processing unit 810, at least one storage unit 820, a bus 830 connecting different system components (including the storage unit 820 and the processing unit 810), and a display unit 840.

The storage unit stores program code, and the program code may be executed by the processing unit 810, so that the processing unit 810 performs the steps according to the various exemplary embodiments of the present disclosure described in the above-mentioned "Exemplary Method" section of the present description. For example, the processing unit 810 may perform the steps of the method shown in FIG. 2 and the like.

The storage unit 820 may include a volatile storage unit, such as a random access storage unit (RAM) 8201 and/or a cache storage unit 8202, and may further include a read-only storage unit (ROM) 8203.

The storage unit 820 may further include a program/utility 8204 having a set of (at least one) program modules 8205, the program modules 8205 may include, but not limited to: an operating system, one or more application programs, other program modules, and program data, each of these examples, or some combinations, may include the implementation of a network environment. The bus 830 may include a data bus, an address bus, and a control bus.

The electronic device 800 may also communicate with one or more external devices 870 (such as a keyboard, a pointing device, a Bluetooth device, etc.), the communication may occur through an input/output (I/O) interface 850. The electronic device 800 may further include a display unit 840 which is connected to the input/output (I/O) interface 850 for display. Furthermore, the electronic device 800 may further communicate with one or more networks (such as a local area network (LAN), a wide area network (WAN), and/or a public network, such as the Internet) through a network adapter 860. As shown, the network adapter 860 communicates with other modules of the electronic device 800 via the bus 830. It should be understood that, although not shown in the figures, other hardware and/or software modules may be in conjunction with the electronic device 800, including but not limited to: microcode, a device driver, a redundant processing unit, an external disk drive array, a RAID system, a tape driver and a data backup storage system, etc.

Those skilled in the art will understand that various aspects of the present disclosure may be implemented as systems, methods, or program products. Therefore, various aspects of the present disclosure may be embodied in the following forms, that is: a complete hardware implementation, a complete software implementation (including a firmware, microcode, etc.), or an implementation combining hardware and software aspects, which may be collectively referred to herein as "circuit", "module" or "system".

Other embodiments of the present disclosure will be readily apparent to those skilled in the art from consideration of the specification and practice of the invention disclosed herein. The present disclosure is intended to cover any variations, uses, or adaptations of the disclosure that follow the general principles of the disclosure and include common sense or customary technical means in the technical field that are not disclosed in the present disclosure. It is intended that the specification and embodiments be considered as exemplary only, with a true scope and spirit of the disclosure being indicated by the following claims.

It should be understood that the present disclosure is not limited to the precise structures described above and illustrated in the drawings, and various modifications and changes may be made without departing from the scope thereof. The scope of the disclosure is limited only by the appended claims.

## Claims

1. A charging method for a multi-cell battery, comprising:
obtaining negative electrode potentials of cells of the multi-cell battery;
comparing the negative electrode potentials of the cells to determine a minimum negative electrode potential;
controlling the multi-cell battery to be charged in a first mode in response to the minimum negative electrode potential being greater than or equal to a safe potential; and
controlling the multi-cell battery to operate in a second mode in response to the minimum negative electrode potential being less than the safe potential.

2. The charging method as claimed in claim 1, wherein the obtaining negative electrode potentials of cells of the multi-cell battery comprises:
obtaining the negative electrode potentials of the cells through potential differences between an insulating measurement structure and negative electrode tabs of adjacent cells; wherein the insulating measurement structure is arranged between two adjacent cells.

3. The charging method as claimed in claim 2, wherein the insulating measurement structure comprises an insulation layer, a measurement layer, and an isolation layer;
the obtaining the negative electrode potentials of the cells through potential differences between an insulating measurement structure and negative electrode tabs of adjacent cells comprises:
obtaining the negative electrode potentials of the cells through the potential differences between the measurement layer and the negative electrode tabs of the adjacent cells;
wherein the insulation layer is arranged between the two adjacent cells, the measurement layer is arranged at a side of the insulation layer being close to a cell, and the isolation layer is arranged between the measurement layer and the cell.

4. The charging method as claimed in claim 1, wherein the safe potential is any value or any range of -100mV-0.05V.

5. The charging method as claimed in any one of claims 1-4, wherein the controlling the multi-cell battery to be charged in a first mode comprises:
controlling the multi-cell battery to be charged in a first preset current.

6. The charging method as claimed in claim 5, wherein the controlling the multi-cell battery to operate in a second mode comprises:
controlling the multi-cell battery to be charged in a second preset current, the second preset current being less than the first preset current.

7. The charging method as claimed in claim 6, wherein a current range for the first preset current is 2C-10C.

8. The charging method as claimed in any one of claims 1-4, wherein the controlling the multi-cell battery to operate in a second mode comprises:
controlling the multi-cell battery to be in a resting state, until the minimum negative electrode potential is greater than or equal to the safe potential.

9. The charging method as claimed in any one of claims 1-4, wherein the controlling the multi-cell battery to operate in a second mode comprises:
controlling the multi-cell battery to be in a discharging state, until the minimum negative electrode potential is greater than or equal to the safe potential.

10. The charging method as claimed in claim 5, wherein the obtaining negative electrode potentials of cells of the multi-cell battery comprises:
obtaining the negative electrode potentials of cells in real time; or
obtaining the negative electrode potentials in a preset period after the multi-cell battery is charged in the first preset current for a preset time.

11. The charging method as claimed in any one of claims 1-4, further comprising:
obtaining a voltage between a positive terminal and a negative terminal of the multi-cell battery, and determining whether the multi-cell battery is fully charged according to the voltage between the positive terminal and the negative terminal of the multi-cell battery;
stopping charging the multi-cell battery in response to the multi-cell battery being fully charged.

12. A charging circuit for a multi-cell battery, comprising:
a detection circuit, configured to measure negative electrode potentials of cells of the multi-cell battery;
a control circuit, configured to compare the negative electrode potentials of the cells of the multi-cell battery to determine a minimum negative electrode potential; control the multi-cell battery to be charged in a first mode in response to the minimum negative electrode potential being greater than or equal to a safe potential; and control the multi-cell battery to operate in a second mode in response to the minimum negative electrode potential being less than the safe potential.

13. The charging circuit as claimed in claim 12, wherein the detection circuit comprises:
an insulating measurement structure, arranged between two adjacent cells of the multi-cell battery;
a plurality of connection wires, having one end electrically connected to one of a positive electrode tab of the cells, a negative electrode tab of the cells, and a reference tab of the insulating measurement structure, and the other end electrically connected to the control circuit.

14. The charging circuit as claimed in claim 13, wherein the insulating measurement structure comprises:
an insulation layer, arranged between the two adjacent cells of the multi-cell battery;
a measurement layer, arranged at at least part side of the insulation layer being close to a cell, one measurement layer corresponding to one cell, the measurement layer being configured to measure a negative electrode potential of the cell; and
an isolation layer, arranged between the measurement layer and the cell, the isolation layer is configured to isolate the measurement layer and the cell.

15. The charging circuit as claimed in any one of claims 12-14, wherein the control circuit is configured to control the multi-cell battery to be charged in a first preset current in response to the minimum negative electrode potential being greater than or equal to the safe potential.

16. The charging circuit as claimed in claim 15, wherein the control circuit is configured to control the multi-cell battery to be charged in a second preset current in response to the minimum negative electrode potential being less than the safe potential, and the second preset current is less than the first preset current.

17. The charging circuit as claimed in any one of claims 12-14, wherein the control circuit is configured to control the multi-cell battery to be in a resting state in response to the minimum negative electrode potential being less than the safe potential, until the minimum negative electrode potential is greater than or equal to the safe potential.

18. The charging circuit as claimed in any one of claims 12-14, wherein the control circuit is configured to control the multi-cell battery to be in a discharging state in response to the minimum negative electrode potential being less than the safe potential, until the minimum negative electrode potential is greater than or equal to the safe potential.

19. The charging circuit as claimed in claim 15, wherein the detection circuit is configured to obtain the negative electrode potentials of the cells in real time, or obtain the negative electrode potentials in a preset period after the multi-cell battery is charged in the first preset current for a preset time.

20. The charging circuit as claimed in any one of claims 12-14, wherein the control circuit is further configured to obtain a voltage between a positive terminal and a negative terminal of the multi-cell battery, and determine whether the multi-cell battery is fully charged according to the voltage between the positive terminal and the negative terminal of the multi-cell battery; and stop charging the multi-cell battery in response the multi-cell battery being fully charged.

21. A multi-cell battery, comprising:
a plurality of cells, connected in parallel or in series;
an insulating measurement structure, arranged between two adjacent cells and configured to isolate adjacent cells and measure negative electrode potentials of the cells; and
a housing, configured to cover the plurality of cells and the insulating measurement structure.

22. The multi-cell battery as claimed in claim 21, wherein the insulating measurement structure comprises:
an insulation layer, arranged between the two adjacent cells of the multi-cell battery;
a measurement layer, arranged at at least part side of the insulation layer being close to a cell, one measurement layer corresponding to one cell, the measurement layer being configured to measure a negative electrode potential of the cell; and
an isolation layer, arranged between the measurement layer and the cell, the isolation layer is configured to isolate the measurement layer and the cell.

23. The multi-cell battery as claimed in claim 22, wherein a cell comprises a positive electrode tab and a negative electrode tab, and the positive electrode tab and the negative electrode tab are penetrated the housing to outside;
a reference tab is arranged on the measurement layer;
a negative electrode potential is a potential difference between the negative electrode tab and the reference tab.

24. The multi-cell battery as claimed in claim 23, further comprising:
a control component, connected to the positive electrode tab, the negative electrode tab, and the reference tab, configured to capture a potential difference between the negative electrode tab and the reference tab as the negative electrode potential of the cell of the multi-cell battery, and controlling a charging state of the multi-cell battery.

25. The multi-cell battery as claimed in claim 21, wherein a surface area of a side of the insulation layer being close to the cells is consistent with side areas of the cells in response to two adjacent cells being connected in parallel.

26. The multi-cell battery as claimed in claim 21, wherein the insulation layer and the housing are sealed to form a plurality of single-cell reception spaces in response to the two adjacent cells being connected in series;
each of the single-cell reception spaces is configured to accommodate a single cell.

27. The multi-cell battery as claimed in claim 22, wherein the insulation layer is a composite material layer which is made from at least one of polypropylene, polyethylene, polyimide film, polyamide film, polyethylene terephthalate, and spandex or aramid film.

28. The multi-cell battery as claimed in claim 22 or 27, wherein a thickness of the insulation layer is any value of 0.1~ 1000um.

29. The multi-cell battery as claimed in claim 22, wherein the measurement layer is at least one of lithium metal and lithium titanate.

30. The multi-cell battery as claimed in claim 22 or 27, wherein a thickness of the measurement layer is any value of 1~100µm.

31. A terminal device, comprising a multi-cell battery as claimed in any one of claims 21-30.

32. An electronic device, comprising:
a processor; and
a memory for storing executable instructions of the processor;
wherein the processor is configured to implement a charging method for a multi-cell battery as claimed in any one of claims 1-11 via executing the executable instructions.
